(19) 

**Europäisches Patentamt**
**European Patent Office**
**Office européen des brevets**

(11) **EP 4 310 715 A1**

(12) **EUROPEAN PATENT APPLICATION**
published in accordance with Art. 153(4) EPC

(43) Date of publication:
**24.01.2024 Bulletin 2024/04**

(21) Application number: **22770968.0**

(22) Date of filing: **14.02.2022**

(51) International Patent Classification (IPC):
*G06F 30/12* (2020.01)    *G06F 30/27* (2020.01)

(52) Cooperative Patent Classification (CPC):
**G06F 30/12; G06F 30/27**

(86) International application number:
**PCT/JP2022/005626**

(87) International publication number:
**WO 2022/196209 (22.09.2022 Gazette 2022/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.03.2021  JP 2021044488**

(71) Applicants:
• **NEC Corporation**
  **108-8001 Tokyo (JP)**
• **Tohoku University**
  **Sendai-shi, Miyagi 980-8577 (JP)**

(72) Inventors:
• **KUWAMORI Naoki**
  **Tokyo 108-8001 (JP)**

• **MUSA Akihiro**
  **Tokyo 108-8001 (JP)**
• **TAKIGAWA Yohei**
  **Tokyo 108-8001 (JP)**
• **KAZAMA Yuka**
  **Tokyo 108-8001 (JP)**
• **SATOU Yoshihiko**
  **Tokyo 136-8627 (JP)**
• **KOBAYASHI Hiroaki**
  **Sendai-shi, Miyagi 980-8577 (JP)**
• **KIKUGAWA Gota**
  **Sendai-shi, Miyagi 980-8577 (JP)**
• **OKABE Tomonaga**
  **Sendai-shi, Miyagi 980-8577 (JP)**
• **KOMATSU Kazuhiko**
  **Sendai-shi, Miyagi 980-8577 (JP)**

(74) Representative: **Betten & Resch**
**Patent- und Rechtsanwälte PartGmbB**
**Maximiliansplatz 14**
**80333 München (DE)**

(54) **PHYSICAL PROPERTY MAP IMAGE GENERATION DEVICE, CONTROL METHOD, AND NON-TRANSITORY COMPUTER READABLE MEDIUM**

(57)    A physical property map image generation apparatus (2000) acquires, for each of a plurality of patterns of a material (60), physical property information (20) indicating a physical property quantity for each of a plurality of physical properties of a product (70). The physical property map image generation apparatus (2000) generates, by using the physical property information (20), a self-organizing map (30). A position in a map space and a physical property vector indicating a value related to a physical property quantity for each of a plurality of types of physical properties of the product (70) are assigned to each of nodes on the self-organizing map (30). The physical property map image generation apparatus (2000) generates a physical property map image (40) from the self-organizing map (30). On the physical property map image 40, each of the nodes arranged in the map space is represented by a color assigned to that node. For each of the nodes, each of two or three base color components of a color assigned to the node is determined based on a value that a physical property vector assigned to that node indicates for a physical property corresponding to that base color.

EP 4 310 715 A1

60

70

```
┌──────────┐      ┌──────────────────┐      ┌──────────┐
│ MATERIAL │─────▶│ GENERATION PROCESS│─────▶│ PRODUCT  │
└──────────┘      │ OF TARGET PROCESS │      └──────────┘
                  └──────────────────┘
```

MATERIAL
IDENTIFICATION ──10
INFORMATION

20──  PHYSICAL
       PROPERTY
       INFORMATION

10                              20

MATERIAL                   PHYSICAL
IDENTIFICATION ········    PROPERTY
INFORMATION                INFORMATION

2000

PHYSICAL PROPERTY MAP
IMAGE GENERATION APPARATUS

GENERATE SELF-ORGANIZING MAP 30 SHOWING DISTRIBUTION
OF PHYSICAL PROPERTIES OF PRODUCT 70 BY USING
MATERIAL IDENTIFICATION INFORMATION 10
AND PHYSICAL PROPERTY INFORMATION 20

SELF-ORGANIZING MAP ──30

GENERATE MAP IMAGE 40 BY ASSIGNING COLOR TO
EACH NODE ON SELF-ORGANIZING MAP 30 BY FOCUSING
ATTENTION ON TWO OR THREE PHYSICAL PROPERTIES

PHYSICAL PROPERTY ──30
MAP IMAGE

Fig. 1

## Description

## Technical Field

The present disclosure relates to a technology for providing information related to product development.

## Background Art

In product development, it is useful to understand a relationship between a material and a product. Therefore, a system for helping a user or the like understand a relationship between a material and a product has been developed. For example, Patent Literature 1 discloses a system for helping a user or the like understand a causal relationship between design values of a tire and physical property values thereof by using a self-organizing map.

## Citation List

## Patent Literature

Patent Literature 1: Japanese Unexamined Patent Application Publication No. 2016-148988

## Summary of Invention

## Technical Problem

In Patent Literature 1, the self-organizing map is used to determine which one of a plurality of design variables of the tire is important factor. Therefore, it is not assumed that the self-organizing map is used for any purpose other than the above-described purpose. The present disclosure has been made in view of the above-described problem, and an object thereof is to provide a novel technique for providing information useful for product development.

## Solution to Problem

A physical property map image generation apparatus according to the present disclosure includes: acquisition unit for acquiring, for each of a plurality of patterns of a material that can be used in a target process, physical property information indicating a physical property quantity for each of a plurality of physical properties of a product that can be generated in the target process; self-organizing map generation unit for generating, by using the physical property information, a self-organizing map on which each node is assigned a position in a map space and a physical property vector indicating a value related to a physical property quantity for each of n types of the physical properties of the product; and physical property map image generation unit for generating a physical property map image that represents each of the nodes arranged in the map space by a color assigned to that node. The physical property map image generation means determines, for each of two or three base colors, a base color component of a color to be assigned to each of the nodes based on a value that the physical property vector assigned to that node indicates for a physical property corresponding to that base color.

A control method according to the present disclosure is performed by a computer. The control method includes: an acquisition step for acquiring, for each of a plurality of patterns of a material that can be used in a target process, physical property information indicating a physical property quantity for each of a plurality of physical properties of a product that can be generated in the target process; a self-organizing map generation step of generating, by using the physical property information, a self-organizing map on which each node is assigned a position in a map space and a physical property vector indicating a value related to a physical property for each of a plurality of types of the physical properties of the product; and a physical property map image generation step of generating a physical property map image that represents each of the nodes arranged in the map space by a color assigned to that node. The physical property map image generation step, determining, for each of two or three base colors, a base color component of a color to be assigned to each of the nodes based on a value that the physical property vector assigned to that node indicates for a physical property corresponding to that base color.

A non-transitory computer readable medium according to the present disclosure stores a program for causing a computer to perform a control method according to the present disclosure.

## Advantageous Effects of Invention

According to the present disclosure, a novel technique for providing information useful for product development is provided.

## Brief Description of Drawings

Fig. 1 shows an example of an overview of operations performed by a physical property map image generation apparatus according to s first example embodiment;
Fig. 2 is a block diagram showing an example of a functional configuration of the physical property map image generation apparatus according to the first example embodiment;
Fig. 3 is a block diagram showing an example of a hardware configuration of a computer that implements a physical property map image generation apparatus;
Fig. 4 is a flowchart showing an example of a flow of processing performed by the physical property map image generation apparatus according to the first example embodiment;

Fig. 5 shows an example of an association between identification information of a material and a specification thereof in the form of a table;

Fig. 6 shows an example of an association between material identification information 10 and physical property information 20 in the form of a table;

Fig. 7 is a flowchart showing an example of a flow of processing for assigning colors to nodes;

Fig. 8 shows an example of a structure of a self-organizing map 30 on which colors and material identification information 10 have already been assigned; and

Fig. 9 shows an example of a physical property map image 40 in which the arrangement of nodes is represented by a checkered patter.

**Example Embodiment**

An example embodiment according to the present disclosure will be described hereinafter in detail with reference to the drawings. Further, components corresponding to or the same as each other are assigned the same or corresponding numerical numbers (or symbols) throughout the drawings, and redundant descriptions thereof are omitted as appropriate. Further, unless otherwise described, pre-defined information such as predetermined values and thresholds are stored in advance in a storage device or the like accessible from an apparatus that uses these values.

[First Example Embodiment]

<Overview>

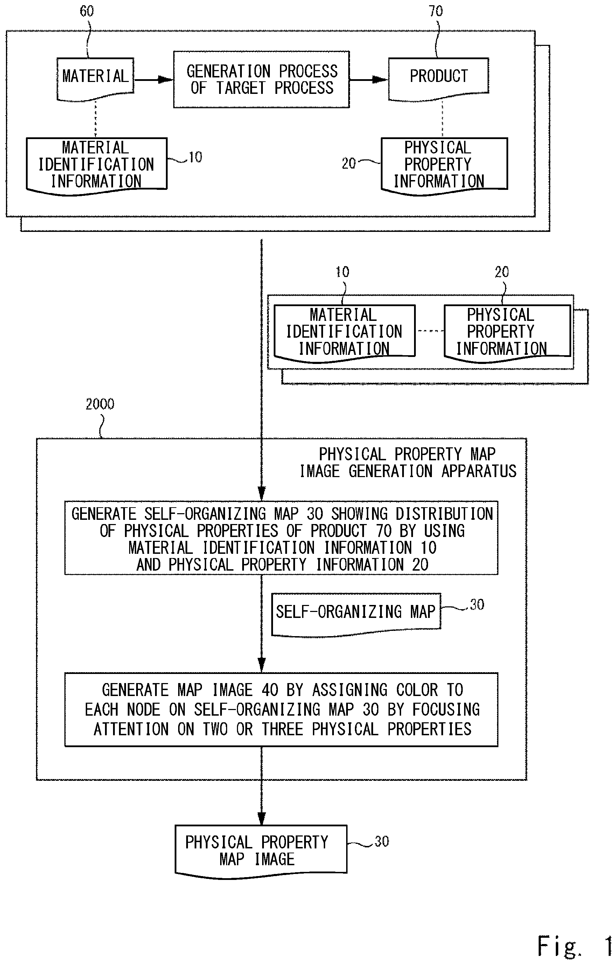

Fig. 1 shows an example of an overview of operations performed by a physical property map image generation apparatus 2000 according to a first example embodiment. Note that Fig. 1 is a diagram merely for facilitating the understanding of the overview of the physical property map image generation apparatus 2000, and the operations performed by the physical property map image generation apparatus 2000 are not limited to those shown in Fig. 1.

The physical property map image generation apparatus 2000 generates a physical property map image 40 for a product 70 that can be generated in a specific process (hereinafter also referred to as a target process) in product development. The physical property map image 40 is an image that shows a distribution of physical properties of the product 70 as a distribution of colors by focusing attention on two or three specific types of physical properties.

The product 70 is a product that is predicted to be generated or actually generated by processing a material 60 in a generation process of the target process. The material 60 is a material used to generate the product 70. Various patterns of materials 60 can be used in the target process. The physical properties of the product 70 can vary depending on the used material 60.

A pattern of the material 60 is specified by its material specification. In other words, materials 60 having material specifications different from each other are handled as the materials 60 of different patterns from each other. On the other hand, materials 60 having the same material specifications as each other are handled as the materials 60 of the same pattern as each other. A material specification is represented by, for example, a type of the material, types of substances constituting the material, a blending ratio of each substance, or a type of processing performed to generate the material. Examples of types of materials include carbon fiber reinforced plastics and stainless steel. For example, assume that the material 60 is a carbon fiber reinforced plastic. In this case, the material specification of the material 60 includes the type of each of one or more carbon fibers that constitute the material 60 (such as polyacrylonitrile fibers and cellulose carbonized fibers), the type of each of one or more of resins that constitute the material 60 (such as epoxy and polyether tephthalate), and the blending ratio of those materials. Further, the material specification may also include a type of fiber directional polymerization method, a type of crimping method, or a resin composition.

To generate the above-described physical property map image 40, , for each of a plurality of various patterns of the material 60 (in other words, for materials 60 specified by respective material specifications of various patterns), the physical property map image generation apparatus 2000 acquires material identification information 10 being identification information of the material 60 and physical property information 20 indicating the physical properties of a product 70 that can be generated in the target process by using the material 60. The physical property information 20 indicates a physical property quantity for each of a plurality of types of physical properties of the product 70. Examples of types of physical properties include incombustibility, heat resistance, elastic modulus, or tenacity.

It is noted that the material identification information 10 does not necessarily have to be acquired. As will be described later, for example, the material identification information 10 is used to include an indication indicating the material identification information 10 in the physical property map image 40. However, the physical property map image 40 does not necessarily have to include this indication. Therefore, when the material identification information 10 is not used, the physical property map image generation apparatus 2000 does not have to acquire the material identification information 10.

The physical property map image generation apparatus 2000 generates a self-organizing map 30 showing a distribution of physical properties of the product 70 by using the physical property information 20. The self-organizing map 30 has a plurality of nodes arranged in an m-dimensional map space. Note that m is set to two or three so that the physical property map image 40 can be generated from the self-organizing map 30. For example, nodes can be represented by cells of a checkered pattern or grid points of a grid pattern.

Each of the nodes on the self-organizing map 30 is assigned multidimensional data (hereinafter also referred to as a physical property vector) representing that represents the magnitude of the physical property quantity for each of a plurality of types of physical properties. For example, assume that four types of physical properties including incombustibility, heat resistance, elastic modulus, and tenacity, are used. In this case, the physical property vector is a four-dimensional data that represents the magnitude of the physical property quantity for each of these four types of physical properties. In the following description, the number of dimensions of the physical property vector is denoted by n. Note that n is larger than m (n>m). That is, on the self-organizing map 30, the space of the physical property vector is a high-dimensional space and the map space while a low-dimensional space.

The physical property information 20 indicates physical property quantities of at least n types of physical properties. The physical property map image generation apparatus 2000 performs training for the self-organizing map 30 by using physical property quantities of the n types of physical properties indicated by the physical property information 20 and determines a physical property vector to be assigned to each of the nodes, thereby generating a self-organizing map 30.

Further, the physical property map image generation apparatus 2000 assigns a color to each node on the self-organizing map 30, and generates a physical property map image 40 as an image in which each node is represented by the assigned color. The physical property map image generation apparatus 2000 focuses attention on two or three types of physical properties to assign colors to the nodes. More specifically, the physical property map image generation apparatus 2000 determines the color to be assigned to each node according to values that correspond to the two or three specific types of physical properties, among the values indicated by the physical property vector of that node. Hereafter, the color assigned to a node is referred to as the assigned color of the node.

Note that the two or three physical properties used for the determination of assigned colors are assigned base colors different from each other. For example, these base colors are primary colors different from each other (e.g., red, green, and blue). The physical property map image generation apparatus 2000 determines the magnitude of each base color component of the assigned color of the node based on the value that the physical property vector of that node indicates for the physical property corresponding to that base color.

For example, assume that attention is focused on two types of physical properties in order to determine an assigned color. In this case, these two physical properties are referred to as a first physical property and a second physical property, respectively. Further, base colors corresponding to the first and second physical properties are referred to as a first base color and a second base color, respectively.

The physical property map image generation apparatus 2000 determines the magnitude of the first base color component of the assigned color of the node based on a value that the physical property vector of that node indicates for the first physical property. Further, the physical property map image generation apparatus 2000 determines the magnitude of the second base color component of the assigned color of the node based on a value that the physical property vector of that node indicates for the second physical property. Further, the physical property map image generation apparatus 2000 determines the magnitude of a third base color of the assigned color of the node based on a value that the physical property vector of that node indicates for a third physical property.

For example, assume that the first physical property is incombustibility and the second physical property is heat-resistance. Further, assume that red is used as the first base color and green is used as the second base color. In this case, the physical property map image generation apparatus 2000 determines the magnitude of the red component of the assigned color of the node based on a value that the physical property vector of that node indicates for the incombustibility. Further, the physical property map image generation apparatus 2000 determines the magnitude of the green component of the assigned color of the node based on a value that the physical property vector of that node indicates for the heat resistance. Note that in this example, a fixed value (e.g., zero) is used for the magnitude of the blue component of the assigned color.

In the case where a physical property map image 40 is generated by focusing attention on three physical properties, another physical property is used. This physical property is referred to as a third physical property. Further, the base color corresponding to the third physical property is referred to as the third base color. In this case, the magnitude of the third base color component of the assigned color of the node is determined based on a value that the physical property vector indicates for the third physical property. For example, three primary colors of light, i.e., red, green, and blue, are used for the first, second, and third base colors, respectively.

<Example of Advantageous Effect>

In product development, in order to generate a product having desired physical properties, there are cases where a material with which such a product can be generated is searched for. One way to carry out such a search is to simulate the generation of a product or actually generate a product while widely changing its material specification. Further, it is also conceivable to adopt a technique in which a reverse analysis for predicting a material specification from desired physical properties by using a relationship between a material specification and physical properties of products (a relationship between material identification information 10 and physical property information 20 in the present disclosure) that is accumulated through such simulations or generation of products.

The physical property map image 40 provided by the physical property map image generation apparatus 2000 is an image in which a distribution of physical properties of a product 70 is visually shown and is useful for the aforementioned reverse analysis. Specifically, in the physical property map image 40, the color of each node is determined by focusing attention on two or three physical properties among a plurality of physical properties of the product 70. Therefore, it is possible to intuitively recognize, from the distribution of colors in the physical property information 20, the distribution of physical properties of the product 70 in which attention is focused on these two or three physical properties.

For example, assume that among the nodes shown in the physical property map image 40, there is a node that is assigned a color satisfying a condition of "all base color components are sufficiently large". For example, in the case where the base colors are red, green, and blue, it can be said that a color close to white satisfies the above-described condition. It can be said that such a node represents a product 70 that exhibits a satisfactory physical property quantity for each of the two or three physical properties on which attention is focused in order to determine colors to be assigned to nodes. Therefore, by using the physical property map image 40, it is possible to easily realize that a product 70 having desired physical properties can be generated.

Note that one way of selecting physical properties on which attention should be focused in order to determine colors to be assigned to nodes is to select two or three physical properties that are in a trade-off relationship with each other. By making such a selection, it is possible to recognize that a product 70 having satisfactory physical properties for all of the two or three physical properties that are supposed to be in a trade-off relationship with each other can be generated.

Further, by including an indication showing a relationship between the material identification information 10 and the node in the physical property map image 40, it is possible to find material specification close to that with which a product 70 having such desired physical properties can be generated. This feature will be described later in detail.

The physical property map image generation apparatus 2000 according to this example embodiment will be described hereinafter in a more detailed manner.

<Example of Functional Configuration>

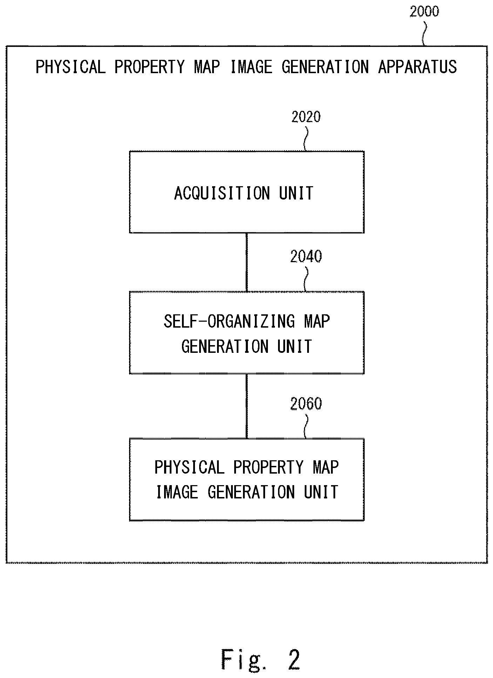

Fig. 2 is a block diagram showing an example of a functional configuration of the physical property map image generation apparatus 2000 according to the first example embodiment. The physical property map image generation apparatus 2000 includes an acquisition unit 2020, a self-organizing map generation unit 2040, and a physical property map image generation unit 2060. The acquisition unit 2020 acquires the material identification information 10 and the physical property information 20 for each of a plurality of various patterns of the material 60. The self-organizing map generation unit 2040 generates a self-organizing map 30 using the material identification information 10 and the physical property information 20. The physical property map image generation unit 2060 generates a physical property map image 40 by assigning a color to each node on the self-organizing map 30. The magnitude of each base color component of the assigned color of the node is determined based on a value that the physical property vector of the node indicates for the first physical property. Further, the magnitude of the second base color component of the assigned color of the node is determined based on a value that the physical property vector of the node indicates for the second physical property.

<Example of Hardware Configuration>

Each of functional components of the physical property map image generation apparatus 2000 can be implemented by hardware that implements the functional component (e.g., a hardwired electronic circuit or the like) or by a combination of hardware and software (e.g., a combination of an electronic circuit and a program for controlling it or the like). A case where each of the functional components of the physical property map image generation apparatus 2000 is implemented by a combination of hardware and software will be further described hereinafter.

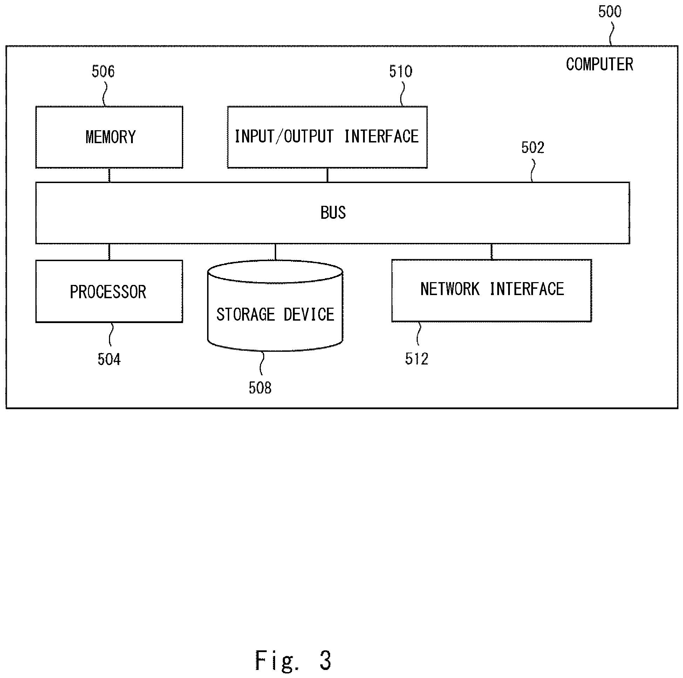

Fig. 3 is a block diagram showing an example of a hardware configuration of a computer 500 that implements the physical property map image generation apparatus 2000. The computer 500 is an arbitrary computer. For example, the computer 500 is a stationary computer such as a server machine or a PC (Personal Computer). Alternatively, for example, the computer 500 is a portable computer such as a smartphone or a tablet-type terminal. The computer 500 may be a special-purpose computer designed to realize the physical property map image generation apparatus 2000, or may be a general-purpose computer.

For example, each of functions of the physical property map image generation apparatus 2000 is implemented by the computer 500 by installing a predetermined application in the computer 500. The aforementioned application is composed of a program for implementing each of the function components of the physical property map image generation apparatus 2000. Note that how to acquire the aforementioned program is arbitrarily determined. For example, the program can be acquired from a storage medium (such as a DVD or a USB memory) in which the program is stored. Alternatively, the program can be acquired, for example, by downloading the program from a server apparatus that manages a storage device in which the program is stored.

The computer 500 includes a bus 502, a processor 504, a memory 506, a storage device 508, an input/output interface 510, and a network interface 512. The bus 502 is a data transmission path through which the processor 504, the memory 506, the storage device 508, the input/output interface 510, and the network interface 512 transmit and receive data to and from each other. However, the method for connecting the processor 504 and the like to each other is not limited to connections through buses.

The processor 504 is any of various types of processors such as a CPU (Central Processing Unit), a GPU (Graphics Processing Unit), or an FPGA (Field-Programmable Gate Array). The memory 506 is a primary storage device implemented by using a RAM (Random Access Memory) or the like. The storage device 508 is a secondary storage device implemented by using a hard disk drive, an SSD (Solid State Drive), a memory card, or a ROM (Read Only Memory).

The input/output interface 510 is an interface for connecting the computer 500 with an input/output device(s). For example, an input device such as a keyboard and an output device such as a display device are connected to the input/output interface 510.

The network interface 512 is an interface for connecting the computer 500 to a network. The network may be a LAN (Local Area Network) or a WAN (Wide Area Network).

In the storage device 508, programs for implementing respective functional components of the physical property map image generation apparatus 2000 (programs for implementing the above-described applications) are stored. The processor 504 implements each of functional components of the physical property map image generation apparatus 2000 by loading the aforementioned program onto the memory 506 and executing the loaded program.

The physical property map image generation apparatus 2000 may be implemented by one computer 500 or by a plurality of computers 500. In the latter case, the configurations of the computers 500 do not need to be identical to each other, but can be different from each other.

<Flow of Processes>

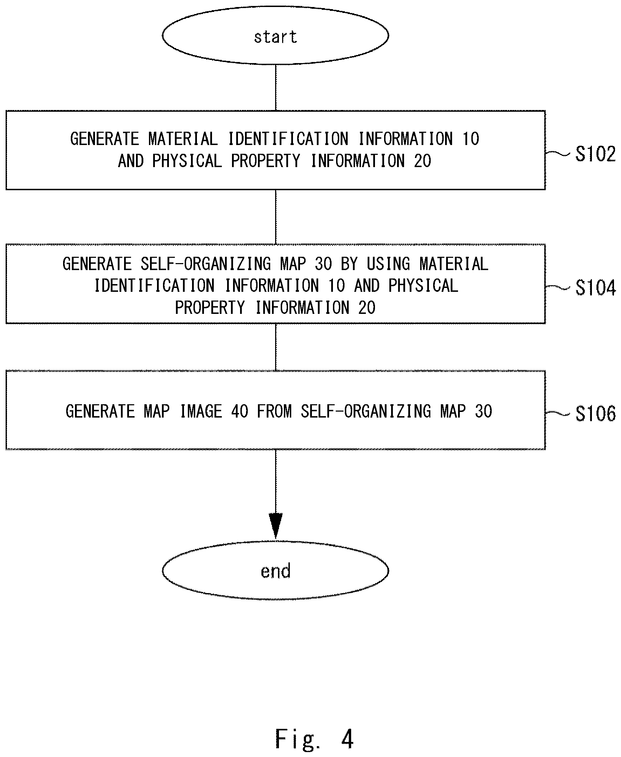

Fig. 4 is a flowchart showing an example of a flow of processing performed by the physical property map image generation apparatus 2000 according to the first example embodiment. The acquisition unit 2020 acquires material identification information 10 and physical property information 20 for each of a plurality of materials 60 that can be used in the target process (S102). The self-organizing map generation unit 2040 generates a self-organizing map 30 by using the physical property information 20 (S104). The self-organizing map generation unit 2040 generates a physical property map image 40 from the self-organizing map 30 (S106).

<Acquisition of Material Identification Information 10 and Physical Property Information 20: S102>

For each of a plurality of materials 60 of various patterns that can be used in the target process, the acquisition unit 2020 acquires material identification information 10 of that material 60 and the physical property information 20 for a product 70 that can be generated by using the material 60 (S102). As described above, a pattern of a material 60 is specified by a material specification. Therefore, it can be said that the material identification information 10 is identification information that is assigned to a specific material specification.

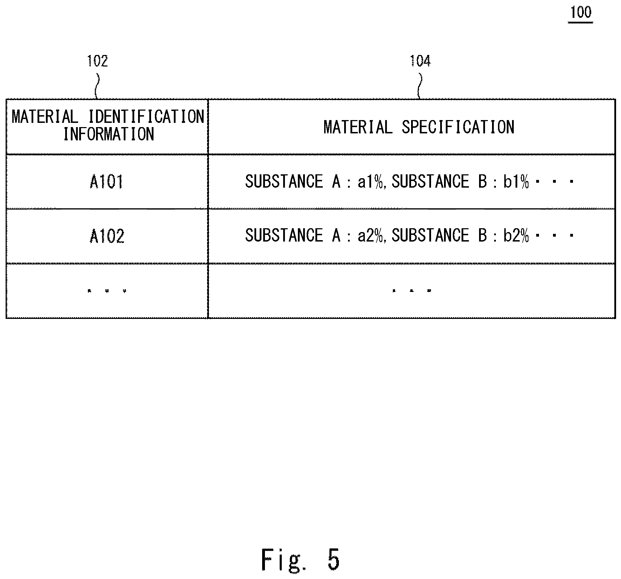

Fig. 5 shows an example of an association between identification information of materials and specifications thereof in the form of a table. Table 100 in Fig. 5 has a column named material identification Information 102 and a column named material specification 104. The material identification information 102 indicates identification information assigned to a material 60. The material specification 104 indicate a specification of the material 60.

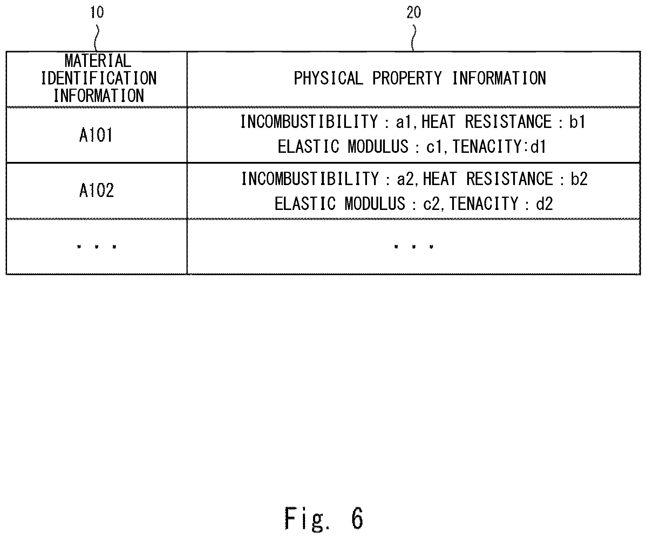

Fig. 6 shows an example of an association between material identification information 10 and physical property information 20 in the form of a table. In the example shown in Fig. 6, the physical property information 20 shows, for each type of physical property, an association of "Label indicating a type of physical property: Physical property quantity of that physical property".

The acquisition unit 2020 acquires a plurality of pairs of the material identification information 10 and the physical property information 20. There are various methods by which the acquisition unit 2020 acquires pairs of the material identification information 10 and the physical property information 20. For example, pairs of the material identification information 10 and the physical property information 20 are stored in advance in an arbitrary storage device accessible from the physical property map image generation apparatus 2000. The acquisition unit 2020 acquires a pair of the material identification information 10 and the physical property information 20 by accessing this storage device. Alternative, for example, the acquisition unit 2020 may acquire a pair of the material identification information 10 and the physical property information 20 by receiving an input from a user for entering the pair of the material identification information 10 and the physical property information 20. Alternatively, for example, the acquisition unit 2020 may acquire a pair of the material identification information 10 and the physical property information 20 by receiving the pair of the material identification information 10 and the physical property information 20 transmitted from other apparatuses.

Note that there are various methods for generating a pair of the material identification information 10 and the physical property information 20. For example, a pair of the material identification information 10 and the physical property information 20 is generated by performing a simulation of the generation of a product 70. Specifically, by performing a simulation given an input of a specific material specification, physical property information 20 that indicates a predicted physical property quantity of each physical property of a product 70 is generated. Then, a pair of the generated physical property information 20 and the material identification information 10 assigned to the material specification given as the input is obtained. Note that an existing technique can be used for the above-described technique in which a material specification is acquired as an input and a simulation for outputting predicted data of physical properties of a product that is generated in a specific process using a material specified by the acquired material specifications is performed.

Alternatively, for example, a pair of the material identification information 10 and the physical property information 20 can be generated by actually producing a product 70. Specifically, a product 70 is experimentally generated by using a material 60 represented by a specific material specification in the target process. Further, physical property information 20 is generated by measuring a physical property quantity of each of physical properties of the generated product 70. As a result, a pair of the generated physical property information 20 and the material identification information 10 assigned to the used material 60 is obtained.

Note that a plurality of pieces of physical property information 20 acquired by the acquisition unit 2020 may include those that express data in different ways from each other. For example, it is conceivable that different labels are used for physical properties that are essentially the same as each other. Further, it is conceivable that physical property quantities of the same physical property are expressed in units different from each other. In such a case, it is preferred that the acquisition unit 2020 unifies the ways of expressing data, for example, by unifying labels or performing inter-unit conversion. It is conceivable that such a situation in which the ways of expressing data of pieces of physical property information 20 are different from each other could occur, for example, when pieces of physical property information 20 generated by using a simulation and pieces of physical property information 20 generated by actually generating a product 70 are both acquired.

<Generation of Self-Organizing Map 30: S104>

The self-organizing map generation unit 2040 generates a self-organizing map 30 by using the material identification information 10 and the physical property information 20 (S104). The self-organizing map 30 has a plurality of nodes arranged on an m-dimensional map space (m=2 or m=3). Whether two dimensions or three dimensions are adopted as the number of dimensions of the map space may be determined in advance or designated by a user. Each of the nodes on the self-organizing map 30 is assigned an n-dimensional physical property vector.

The assignment of a physical property vector to each node is carried out through the training of the self-organizing map 30. The training of the self-organizing map 30 can be carried out by inputting n-dimensional training data to be used for the training into the self-organizing map 30. Note that an existing method can be used as an actual method for training the self-organizing map by using training data.

For example, the self-organizing map generation unit 2040 initializes the self-organizing map 30 by an arbitrary method. As the initialization method, for example, a method to initialize a physical property vector of each node to a random value can be adopted. The self-organizing map generation unit 2040 extracts a physical property quantity for each of the n-types of the physical properties from each of the acquired pieces of the physical property information 20 to generate n-dimensional physical property vectors. The self-organizing map generation unit 2040 performs the training of the self-organizing map 30 using each of the physical property vectors as training data, thereby generating the self-organizing map 30. As a result, a physical property vector of each node on the self-organizing map 30 becomes n-dimensional data indicating a value for each of the physical property quantities of n types of the physical properties.

The physical property vector obtained from the physical property information 20 may indicate each of physical property quantities of the n types of the physical properties represented by the physical property information 20 as it is, or may indicate a value that is obtained by converting each of physical property quantities with a predetermined method (e.g., normalization, standardization, or the like).

Note that the number of physical properties represented by the physical property information 20 may be greater than n. In this case, some of data represented by the physical property information 20 are used to generate the self-organizing map 30. Note that which types of the physical properties represented by the physical property information 20 are used to generate the self-organizing map 30 may be determined in advance or designated by a user.

<Generation of Physical Property Map Image 40: S106>

The physical property map image generation unit 2060 generates a physical property map image 40 by assigning a color to each node on the self-organizing map 30 (S106). The physical property map image 40 is an image that is obtained by representing each node arranged in the map space in the self-organizing map 30 by the color assigned to that node. Such an image can also be referred to as a heat map. The method for assigning colors to nodes will be described hereinafter in detail.

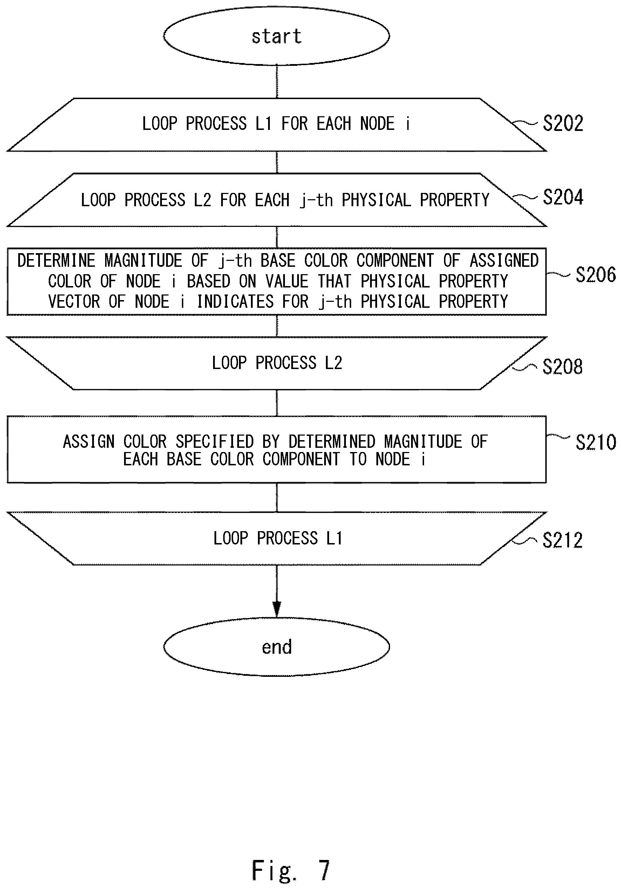

Fig. 7 is a flowchart showing an example of a flow of processing for assigning colors to nodes. Steps S202 to S212 constitute a loop process L1. The loop process L1 is performed once for each node included in the self-organizing map 30. In the step S202, the physical property map image generation unit 2060 determines whether or not the loop process L1 has been performed for all the nodes. When the loop process L1 has already been performed for all the nodes, the series of processes shown in Fig. 7 ends. On the other hand, when there is at least one node for which the loop process L1 has not been performed yet, the physical property map image generation unit 2060 selects one of them. The node selected in the above-described step is denoted by a node i.

Steps S204 to S208 constitute a loop process L2. The loop process L2 is performed once for each type of the physical property used to determine the assigned color. In the step S204, the physical property map image generation unit 2060 determines whether or not the loop process L2 has been performed for all the types of the physical property used to determine the assigned color. When the loop process L2 has already been performed for all the types of the physical property used to determine the assigned color, the process shown in Fig. 7 proceeds to a step S210. On the other hand, when there is at least one physical property used to determine the assigned color for which the loop process L2 has not been performed yet, the physical property map image generation unit 2060 selects one of them. The physical property selected in the above-described step is denoted by a j-th physical property. In the case where the physical property map image 40 is generated by focusing on two physical properties, j is one or two. In contrast, in the case where the physical property map image 40 is generated by focusing on three physical properties, j is one, two, or three.

In the step S206, the physical property map image generation unit 2060 determines the magnitude of a j-th base color component of the assigned color of the node i based on the value that the physical property vector of the node i indicates for the j-th physical property. For example, the magnitude of the j-th base color component of the assigned color of the node i is computed by a conversion formula that is defined based on the numerical range of values that the physical property vector on the self-organizing map 30 indicates for the j-th physical property and the numerical range of the magnitude of each base color component. This conversion formula is expressed, for example, by the below-shown Equation 1.

[Equation 1]

$$c[i,j] = f(x[i,j]) = \frac{x[i,j]}{W[j]} * C \quad (1)$$

In the equation, $c[i,j]$ represents the magnitude of the j-th base color component of the assigned color of the node i. Further, $x[i,j]$ represents a value that the physical property vector of the node i indicates for the j-th physical property. Further, $f()$ represents the conversion formula. Further, $W[j]$ represents the magnitude of the numerical range of values that the physical property vector on the self-organizing map 30 indicates for the j-th physical property. Further, C represents the magnitude of the numerical range of each base color component.

Note that in the conversion formula expressed by Equation 1, the larger the value that the physical property vector indicates for the j-th physical property is, the larger the j-th base color component becomes. In other words, the magnitude of the j-th base color component monotonically increases according to the value that the physical property vector indicates for the j-th physical property. However, the magnitude of the j-th base color component does not necessarily have to monotonically increase according to the value that the physical property vector indicates for the j-th physical property.

For example, the more appropriate the value that the physical property vector indicates for the j-th physical property is, the more the magnitude of the j-th base color component increases. For example, in the case where the j-th physical property is such a physical property that the physical property quantity thereof is larger as the physical property is more appropriate, the physical property map image generation unit 2060 sets a larger value to the j-th base color component as the physical property vector indicates a larger value for the j-th physical property. Further, in the case where the j-th physical property is such a physical property that the physical property quantity thereof is smaller as the physical property is more appropriate, the physical property map image generation unit 2060 sets a larger value to the j-th base color component as the physical property vector indicates a smaller value for the j-th physical property. Further, in the case where there is a specific ideal value for the j-th physical property, the physical property map image generation unit 2060 sets a larger value to the j-th base color component as the physical property vector indicates a value closer to the idea value for the j-th physical property.

The step S208 is the end of the loop process L2. Therefore, the processing shown in Fig. 7 proceeds to a step S204.

The step S210 is performed after the repetition of the loop process L2 for a single node i is finished. Therefore, before performing the step S210, the magnitude of each base color component has been determined for the assigned color of the node i. Therefore, in the step S210, the physical property map image generation unit 2060 assigns the color that is specified by the determined magnitudes of the respective base color components to the node i. For example, assume that red, green, and blue are used as the first, second, and third base colors, respectively. In this case, the assigned color of the node i is expressed as $(R,G,B) = (f(x[i,1]),f(x[i,2]),f(x[i,3]))$.

The step S212 is the end of the loop process L1. Therefore, the processing shown in Fig. 7 proceeds to a step S202.

In addition to the assignments of the assigned colors, the physical property map image generation unit 2060 assigns each of pieces of the material identification information 10 to a node on the self-organizing map 30. Specifically, the physical property map image generation unit 2060 assigns the material identification information 10 to a node having a physical property vector that is most similar to n-dimensional data obtained from the physical property information 20 corresponding to that material identification information 10.

The degree of similarity between two n-dimensional data is determined, for example, based on the distances therebetween. In this case, for example, the physical property map image generation unit 2060 computes, for the physical property vector of each node, a distance from the physical property vector that is obtained from the physical property information 20 corresponding to the material identification information 10. Then, the physical property map image generation unit 2060 assigns the material identification information 10 to a node whose computed distance is the shortest.

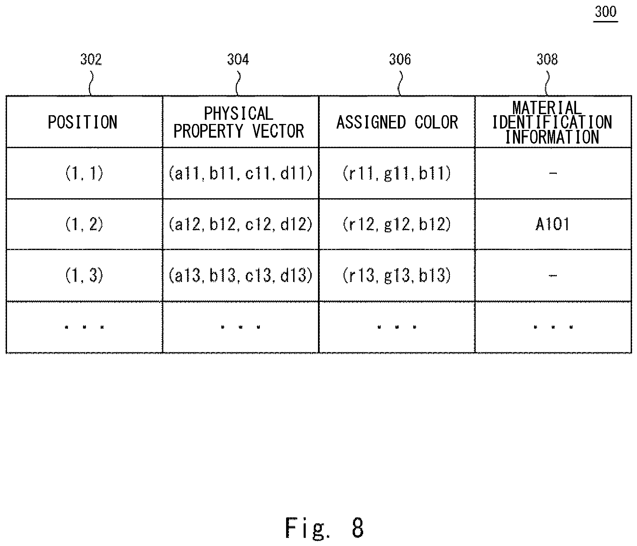

Fig. 8 shows an example of a structure of the self-organizing map 30 on which the colors and the material identification information 10 have already been assigned. Table 300 in Fig. 8 has four columns: position 302, physical property vector 304, assigned color 306, and material identification information 308. Table 300 has one record for one node.

The position 302 indicates coordinates of a node in the m-dimensional map space. In the example shown in Fig. 8, m is two, and x- and y- coordinates are assigned to a node. The physical property vector 304 shows a n-dimensional physical property vector assigned to the node. In the example shown in Fig. 8, n is four. The assigned color 306 shows an assigned color of the node. In the example shown in Fig. 8, each assigned color is defined by three base colors, i.e., red, green, and blue. The material identification information 308 shows material identification information 10 assigned to the node. Note that in a record of a node to which no material identification information 10 is assigned, the material identification information 308 shows "-".

For example, the physical property map image generation unit 2060 generates a physical property map image 40 based on Table 300. Specifically, the physical property map image generation unit 2060 generates a physical property map image 40 by representing each node arranged in the map space by the assigned color of that node.

For example, assume that the arrangement of nodes is expressed by using cells of a checkered pattern. In this case, the physical property map image 40 is an image of a checkered pattern in which each cell is represented by (e.g., filled with) the assigned color of the node corresponding to that cell. Further, the physical property map image generation unit 2060 includes an indication by which it is possible to understand the assignment of the material identification information 10 to a node (in other words, an indication representing a relationship between the material identification information 10 and the node) in the physical property map image 40.

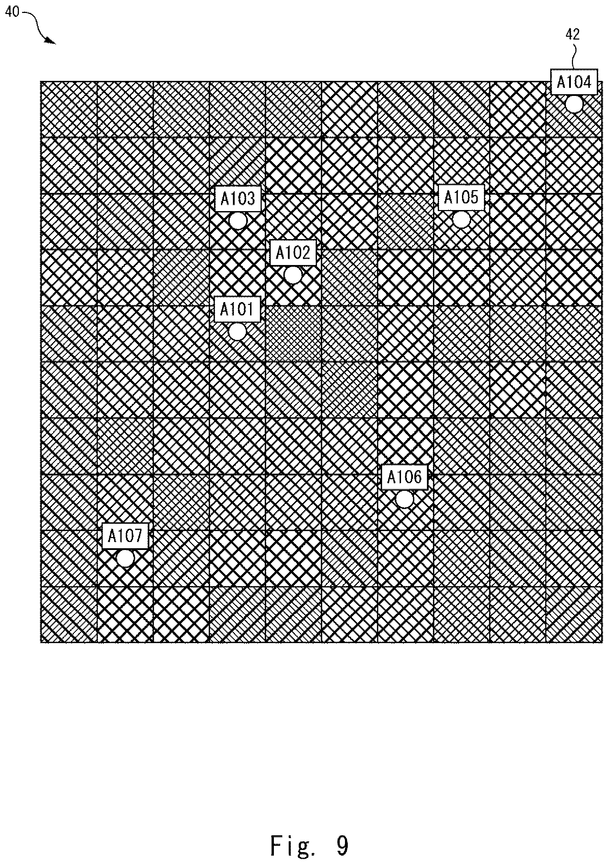

Fig. 9 shows an example of the physical property map image 40 in which the arrangement of nodes is represented by a checkered pattern. In the physical property map image 40 shown in Fig. 9, the color of a cell corresponding to a node is set to the assigned color of that node. In this example, it is assumed that the assigned color is set by focusing attention on two physical properties.

Note that for the sake of illustration, colors of nodes are represented by using diagonal lines. Specifically, the first base color is represented by diagonal lines connecting the upper right and the lower left (hereinafter also referred to as first diagonal lines). Meanwhile, the second base color is represented by diagonal lines connecting the upper left and the lower right (hereinafter also referred to as second diagonal lines). Further, the larger the base color component is, the higher the density of diagonal lines becomes.

A node whose density of the first diagonal lines is high but whose density of the second diagonal lines is low (i.e., a node whose first base color component is large but whose second base color component is small) represents a product 70 whose first physical property is desirable but whose second physical property is not desirable. Further, a node whose density of the first diagonal lines is low but whose density of the second diagonal lines is high (i.e., a node whose first base color component is small but whose second base color component is large) represents a product 70 whose first physical property is not desirable but whose second physical property is desirable. Further, a node whose densities of the first and second diagonal lines are both high (i.e., a node whose first and second base color components are both large) represents a product 70 whose first and second physical properties are both desirable.

Further, the physical property map image 40 shows, for a node to which the material identification information 10 is assigned, an indication 42 representing the material identification information 10 assigned to that node. The indication 42 includes a circle for identifying the node of interest and a value indicated by the material identification information 10 assigned to that node (i.e., identification information of a material 60). Note that the node of interest is a node containing a circle therein.

The physical property map image 40 shown in Fig. 9 is useful, for example, to determine a material specification with which a product 70 whose first and second physical properties are both desirable can be generated. As described above, a node whose first and second base color components are both large represents a product 70 whose first and second physical properties are both desirable. Therefore, for example, a node close to the node whose first and second base color components are both large is determined out of the nodes to which the material identification information 10 are assigned. It is considered that the material specification of a material 60 specified by the material identification information 10 associated with this node is close to the material specification with which a product 70 whose first and second physical properties are both desirable can be generated. Therefore, for example, a developer or the like who searches for suitable material specifications through simulations repeatedly performs the simulations of the generation of a product 70 using the material specification determined as described above as a reference of the material specifications and slightly changing the material specifications for each simulation. In this way, they can find a material specification with which a product 70 whose first and second physical properties are both desirable can be generated.

For example, in the example shown in Fig. 9, there is a node whose densities of the first and second diagonal lines are both high to the right of the node assigned the material identification information 10 indicating "A101" and below the node assigned the material identification information 10 indicating "A102". Therefore, the developer or the like can find a material specification with which a product 70 whose first and second physical properties are both desirable can be generated in a shorter time by performing simulations in which material specifications are changed in a range that is close to both the material specification identified by "A101" and the material specification identified by "A102".

Note that the physical property map image generation unit 2060 may include, in the physical property map image 40, an indication that enables a user or the like to easily determine a material specification to be handled as the reference for the above-mentioned search (indications that enable a user or the like to easily determine "A101" and "A102" in the example shown in Fig. 9). For example, the physical property map image generation unit 2060 determines a node whose magnitudes of all the base color components are equal to or larger than thresholds, and highlights the determined node by making its frame thicker. Alternative, for example, the physical property map image generation unit 2060 may determine a node whose distance from the above-mentioned determined node is equal to or shorter than a threshold and to which the material identification information 10 is assigned, and emphasize an indication 42 attached to that node over other indications 42 (e.g., by using a circle having a color other than white or making its frame thicker).

Note that the method for showing the arrangement of nodes is not limited to the method using a checkered pattern. For example, the arrangement of nodes may be expressed by using a grid pattern. In this case, for example, the physical property map image 40 becomes an image of a grid pattern in which a predetermined area around each grid point (e.g., a circle having a predetermined radius centered at a grid point) is represented by the assigned color of the node corresponding to that grid point.

<Output of Map Image 40>

The physical property map image generation apparatus 2000 outputs the generated physical property map image 40. The physical property map image 40 can be output in various manners. For example, the physical property map image generation apparatus 2000 puts the physical property map image 40 in an arbitrary storage device accessible from the physical property map image generation apparatus 2000. Alternatively, for example, the physical property map image generation apparatus 2000 displays the physical property map image 40 on an arbitrary display device controllable from the physical property map image generation apparatus 2000. Alternatively, for example, the physical property map image generation apparatus 2000 transmits the physical property map image 40 to an arbitrary apparatus that is connected to the physical property map image generation apparatus 2000 so that they can communicate with each other.

Although the present invention is described above with reference to example embodiments, the present invention is not limited to the above-described example embodiments. Various modifications that can be understood by those skilled in the art can be made to the configuration and details of the present invention within the scope of the invention.

Note that, in the above-described examples, the program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g., magneto-optical disks), CD-ROM, CD-R, CD-R/W, and semiconductor memories (such as mask ROM, PROM (Programmable ROM), EPROM (Erasable PROM), flash ROM, RAM, etc.). Further, the program may be provided to a computer using any type of transitory computer readable media. Examples of transitory computer readable media include electric signals, optical signals, and electromagnetic waves. Transitory computer readable media can provide the program to a computer via a wired communication line (e.g., electric wires, and optical fibers) or a wireless communication line.

The whole or part of the example embodiments disclosed above can be described as, but not limited to, the following supplementary notes.

(Supplementary Note 1)

A physical property map image generation apparatus comprising:

> acquisition means for acquiring, for each of a plurality of patterns of a material that can be used in a target process, physical property information indicating a physical property quantity for each of a plurality of physical properties of a product that can be generated in the target process;
> self-organizing map generation means for generating, by using the physical property information, a self-organizing map on which each node is assigned a position in a map space and a physical property vector indicating a value related to a physical property quantity for each of n types of the physical properties of the product; and
> physical property map image generation means for generating a physical property map image that represents each of the nodes arranged in the map space by a color assigned to that node,
> wherein the physical property map image generation means determines, for each of two or three base colors, a base color component of a color to be assigned to each of the nodes based on a value that the physical property vector assigned to that node indicates for a physical property corresponding to that base color.

(Supplementary Note 2)

The physical property map image generation apparatus according to Supplementary note 1,

> wherein the acquisition means acquires identification information of the material corresponding to the physical property information, and
> wherein the physical property map image generation means determines, out of the nodes, the node to which the physical property vector that is most similar to the physical property vector obtained from the physical property information is assigned, and includes, in the physical property map image, an indication representing a relationship between the identification information corresponding to the physical property information and the determined node.

(Supplementary Note 3)

The physical property map image generation apparatus according to Supplementary note 1 or 2, wherein the physical property map image generation means sets, for each of the nodes, a larger value to a magnitude of each base color component of the color assigned to that node as a value that the physical property vector assigned to that node indicates for that base color is more appropriate.

(Supplementary Note 4)

The physical property map image generation apparatus according to Supplementary note 3, wherein the physical property map image generation means determines the node to which a color whose magnitudes of all the base color components are equal to or larger than respective thresholds is assigned, and highlights the determined node in the physical property map image.

(Supplementary Note 5)

The physical property map image generation apparatus according to any one of Supplementary notes 1 to 4, wherein the self-organizing map generation means generates the self-organizing map by training the self-organizing map by using the physical property vector obtained from the physical property information as training data.

(Supplementary Note 6)

The physical property map image generation apparatus according to any one of Supplementary notes 1 to 5, wherein the two or three base colors are primary colors different from each other.

(Supplementary Note 7)

A control method performed by a computer, comprising:

> an acquisition step for acquiring, for each of a plurality of patterns of a material that can be used in a target process, physical property information indicating a physical property quantity for each of a plurality of physical properties of a product that can be generated in the target process;
> a self-organizing map generation step of generating, by using the physical property information, a self-organizing map on which each node is assigned a position in a map space and a physical property vector indicating a value related to a physical property for each of a plurality of types of the physical properties of the product; and
> a physical property map image generation step of generating a physical property map image that represents each of the nodes arranged in the map space by a color assigned to that node,
> wherein in the physical property map image generation step, determining, for each of two or three base colors, a base color component of a color to be assigned to each of the nodes based on a value that the physical property vector assigned to that node indicates for a physical property corresponding to that base color.

(Supplementary Note 8)

The control method according to Supplementary note 7,

wherein in the acquisition step, acquiring identification information of the material corresponding to the physical property information, and
wherein in the physical property map image generation step, determining, out of the nodes, the node to which the physical property vector that is most similar to the physical property vector obtained from the physical property information is assigned, and including, in the physical property map image, an indication representing a relationship between the identification information corresponding to the physical property information and the determined node.

(Supplementary Note 9)

The control method according to Supplementary note 7 or 8,
wherein in the physical property map image generation step, setting, for each of the nodes, a larger value to a magnitude of each base color component of the color assigned to that node as a value that the physical property vector assigned to that node indicates for that base color is more appropriate.

(Supplementary Note 10)

The control method according to Supplementary note 9,
wherein in the physical property map image generation step, determining the node to which a color whose magnitudes of all the base color components are equal to or larger than respective thresholds is assigned, and highlighting the determined node in the physical property map image.

(Supplementary Note 11)

The control method according to any one of Supplementary notes 7 to 10,
wherein in the self-organizing map generation step, generating the self-organizing map by training the self-organizing map by using the physical property vector obtained from the physical property information as training data.

(Supplementary Note 12)

The control method according to any one of Supplementary notes 7 to 11,
wherein the two or three base colors are primary colors different from each other.

(Supplementary Note 13)

A non-transitory computer readable medium for causing a computer to execute:

an acquisition step for acquiring, for each of a plurality of patterns of a material that can be used in a target process, physical property information indicating a physical property quantity for each of a plurality of physical properties of a product that can be generated in the target process;
a self-organizing map generation step of generating, by using the physical property information, a self-organizing map on which each node is assigned a position in a map space and a physical property vector indicating a value related to a physical property for each of a plurality of types of the physical properties of the product; and
a physical property map image generation step of generating a physical property map image that represents each of the nodes arranged in the map space by a color assigned to that node,
wherein in the physical property map image generation step, determining, for each of two or three base colors, a base color component of a color to be assigned to each of the nodes based on a value that the physical property vector assigned to that node indicates for a physical property corresponding to that base color.

(Supplementary Note 14)

The non-transitory computer readable medium according to Supplementary note 13,

wherein in the acquisition step, acquiring identification information of the material corresponding to the physical property information, and
wherein in the physical property map image generation step, determining, out of the nodes, the node to which the physical property vector that is most similar to the physical property vector obtained from the physical property information is assigned, and including, in the physical property map image, an indication representing a relationship between the identification information corresponding to the physical property information and the determined node.

(Supplementary Note 15)

The non-transitory computer readable medium according to Supplementary note 13 or 14,
wherein in the physical property map image generation step, setting, for each of the nodes, a larger value to a magnitude of each base color component of the color assigned to that node as a value that the physical property vector assigned to that node indicates for that base color is more appropriate.

(Supplementary Note 16)

The non-transitory computer readable medium according to Supplementary note 15, wherein in the physical property map image generation step, determining the node to which a color whose magnitudes of all the base color components are equal to or larger than respective thresholds is assigned, and highlighting the determined node in the physical property map image.

(Supplementary Note 17)

The non-transitory computer readable medium according to any one of Supplementary notes 13 to 16, wherein in the self-organizing map generation step, generating the self-organizing map by training the self-organizing map by using the physical property vector obtained from the physical property information as training data.

(Supplementary Note 18)

The non-transitory computer readable medium according to any one of Supplementary notes 13 to 17, wherein the two or three base colors are primary colors different from each other.

This application is based upon and claims the benefit of priority from Japanese patent application No. 2021-044488, filed on March 18, 2021, the disclosure of which is incorporated herein in its entirety by reference.

**Reference Signs List**

| | |
|---|---|
| 10 | MATERIAL IDENTIFICATION INFORMATION |
| 20 | PHYSICAL PROPERTY INFORMATION |
| 30 | SELF-ORGANIZING MAP |
| 40 | PHYSICAL PROPERTY MAP IMAGE |
| 42 | INDICATION |
| 60 | MATERIAL |
| 70 | PRODUCT |
| 100 | TABLE |
| 102 | MATERIAL IDENTIFICATION INFORMATION |
| 104 | MATERIAL SPECIFICATIONS |
| 300 | TABLE |
| 302 | POSITION |
| 304 | PHYSICAL PROPERTY VECTOR |
| 306 | ASSIGNED COLOR |
| 308 | MATERIAL IDENTIFICATION INFORMATION |
| 500 | COMPUTER |
| 502 | BUS |

| | |
|---|---|
| 504 | PROCESSOR |
| 506 | MEMORY |
| 508 | STORAGE DEVICE |
| 510 | INPUT/OUTPUT INTERFACE |
| 512 | NETWORK INTERFACE |
| 2000 | PHYSICAL PROPERTY MAP IMAGE GENERATION APPARATUS |
| 2020 | ACQUISITION UNIT |
| 2040 | SELF-ORGANIZING MAP GENERATION UNIT |
| 2060 | PHYSICAL PROPERTY MAP IMAGE GENERATION UNIT |

**Claims**

1. A physical property map image generation apparatus comprising:

acquisition means for acquiring, for each of a plurality of patterns of a material that can be used in a target process, physical property information indicating a physical property quantity for each of a plurality of physical properties of a product that can be generated in the target process;
self-organizing map generation means for generating, by using the physical property information, a self-organizing map on which each node is assigned a position in a map space and a physical property vector indicating a value related to a physical property quantity for each of n types of the physical properties of the product; and
physical property map image generation means for generating a physical property map image that represents each of the nodes arranged in the map space by a color assigned to that node, wherein the physical property map image generation means determines, for each of two or three base colors, a base color component of a color to be assigned to each of the nodes based on a value that the physical property vector assigned to that node indicates for a physical property corresponding to that base color.

2. The physical property map image generation apparatus according to claim 1,

wherein the acquisition means acquires identification information of the material corresponding to the physical property information, and wherein the physical property map image generation means determines, out of the nodes, the node to which the physical property vector that is most similar to the physical property vector obtained from the physical property information is assigned, and includes, in the physical property map image, an indication representing a relationship between the identification information corresponding to the physical property information and the determined node.

3. The physical property map image generation apparatus according to claim 1 or 2,
wherein the physical property map image generation means sets, for each of the nodes, a larger value to a magnitude of each base color component of the color assigned to that node as a value that the physical property vector assigned to that node indicates for that base color is more appropriate.

4. The physical property map image generation apparatus according to claim 3,
wherein the physical property map image generation means determines the node to which a color whose magnitudes of all the base color components are equal to or larger than respective thresholds is assigned, and highlights the determined node in the physical property map image.

5. The physical property map image generation apparatus according to any one of claims 1 to 4,
wherein the self-organizing map generation means generates the self-organizing map by training the self-organizing map by using the physical property vector obtained from the physical property information as training data.

6. The physical property map image generation apparatus according to any one of claims 1 to 5,
wherein the two or three base colors are primary colors different from each other.

7. A control method performed by a computer, comprising:

an acquisition step for acquiring, for each of a plurality of patterns of a material that can be used in a target process, physical property information indicating a physical property quantity for each of a plurality of physical properties of a product that can be generated in the target process;
a self-organizing map generation step of generating, by using the physical property information, a self-organizing map on which each node is assigned a position in a map space and a physical property vector indicating a value related to a physical property for each of a plurality of types of the physical properties of the product; and
a physical property map image generation step of generating a physical property map image that represents each of the nodes arranged in the map space by a color assigned to that node, wherein in the physical property map image generation step, determining, for each of two or three base colors, a base color component of a color to be assigned to each of the nodes based on a value that the physical property vector assigned to that node indicates for a physical property corresponding to that base color.

8. The control method according to claim 7,

wherein in the acquisition step, acquiring identification information of the material corresponding to the physical property information, and
wherein in the physical property map image generation step, determining, out of the nodes, the node to which the physical property vector that is most similar to the physical property vector obtained from the physical property information is assigned, and including, in the physical property map image, an indication representing a relationship between the identification information corresponding to the physical property information and the determined node.

9. The control method according to claim 7 or 8,
wherein in the physical property map image generation step, setting, for each of the nodes, a larger value to a magnitude of each base color component of the color assigned to that node as a value that the physical property vector assigned to that node indicates for that base color is more appropriate.

10. The control method according to claim 9,
wherein in the physical property map image generation step, determining the node to which a color whose magnitudes of all the base color components are equal to or larger than respective thresholds is assigned, and highlighting the determined node in the physical property map image.

11. The control method according to any one of claims 7 to 10,
wherein in the self-organizing map generation step, generating the self-organizing map by training the self-organizing map by using the physical property vector obtained from the physical property information as training data.

12. The control method according to any one of claims 7 to 11,
wherein the two or three base colors are primary colors different from each other.

13. A non-transitory computer readable medium for causing a computer to execute:

an acquisition step for acquiring, for each of a plurality of patterns of a material that can be used in a target process, physical property information indicating a physical property quantity for each of a plurality of physical properties of a product that can be generated in the target process;

a self-organizing map generation step of generating, by using the physical property information, a self-organizing map on which each node is assigned a position in a map space and a physical property vector indicating a value related to a physical property for each of a plurality of types of the physical properties of the product; and

a physical property map image generation step of generating a physical property map image that represents each of the nodes arranged in the map space by a color assigned to that node, wherein in the physical property map image generation step, determining, for each of two or three base colors, a base color component of a color to be assigned to each of the nodes based on a value that the physical property vector assigned to that node indicates for a physical property corresponding to that base color.

14. The non-transitory computer readable medium according to claim 13,

wherein in the acquisition step, acquiring identification information of the material corresponding to the physical property information, and wherein in the physical property map image generation step, determining, out of the nodes, the node to which the physical property vector that is most similar to the physical property vector obtained from the physical property information is assigned, and including, in the physical property map image, an indication representing a relationship between the identification information corresponding to the physical property information and the determined node.

15. The non-transitory computer readable medium according to claim 13 or 14,
wherein in the physical property map image generation step, setting, for each of the nodes, a larger value to a magnitude of each base color component of the color assigned to that node as a value that the physical property vector assigned to that node indicates for that base color is more appropriate.

16. The non-transitory computer readable medium according to claim 15,
wherein in the physical property map image generation step, determining the node to which a color whose magnitudes of all the base color components are equal to or larger than respective thresholds is assigned, and highlighting the determined node in the physical property map image.

17. The non-transitory computer readable medium according to any one of claims 13 to 16,
wherein in the self-organizing map generation step, generating the self-organizing map by training the self-organizing map by using the physical property vector obtained from the physical property information as training data.

18. The non-transitory computer readable medium according to any one of claims 13 to 17,
wherein the two or three base colors are primary colors different from each other.

60 70

| MATERIAL | → | GENERATION PROCESS OF TARGET PROCESS | → | PRODUCT |

MATERIAL
IDENTIFICATION
INFORMATION ~10

20~ PHYSICAL
PROPERTY
INFORMATION

10 20

MATERIAL
IDENTIFICATION
INFORMATION ----- PHYSICAL
PROPERTY
INFORMATION

2000

PHYSICAL PROPERTY MAP
IMAGE GENERATION APPARATUS

GENERATE SELF-ORGANIZING MAP 30 SHOWING DISTRIBUTION
OF PHYSICAL PROPERTIES OF PRODUCT 70 BY USING
MATERIAL IDENTIFICATION INFORMATION 10
AND PHYSICAL PROPERTY INFORMATION 20

SELF-ORGANIZING MAP ~30

GENERATE MAP IMAGE 40 BY ASSIGNING COLOR TO
EACH NODE ON SELF-ORGANIZING MAP 30 BY FOCUSING
ATTENTION ON TWO OR THREE PHYSICAL PROPERTIES

PHYSICAL PROPERTY
MAP IMAGE ~30

Fig. 1

2000

PHYSICAL PROPERTY MAP IMAGE GENERATION APPARATUS

2020

ACQUISITION UNIT

2040

SELF-ORGANIZING MAP
GENERATION UNIT

2060

PHYSICAL PROPERTY MAP
IMAGE GENERATION UNIT

Fig. 2

500

COMPUTER

506

MEMORY

510

INPUT/OUTPUT INTERFACE

502

BUS

PROCESSOR

504

STORAGE DEVICE

508

NETWORK INTERFACE

512

Fig. 3

```
            ╭─────────────────────────╮
            │          start          │
            ╰─────────────────────────╯
                         │
    ┌─────────────────────────────────────────────────────┐
    │   GENERATE MATERIAL IDENTIFICATION INFORMATION 10    │ ～S102
    │      AND PHYSICAL PROPERTY INFORMATION 20            │
    └─────────────────────────────────────────────────────┘
                         │
    ┌─────────────────────────────────────────────────────┐
    │   GENERATE SELF-ORGANIZING MAP 30 BY USING MATERIAL  │
    │      IDENTIFICATION INFORMATION 10 AND PHYSICAL      │ ～S104
    │             PROPERTY INFORMATION 20                  │
    └─────────────────────────────────────────────────────┘
                         │
    ┌─────────────────────────────────────────────────────┐
    │   GENERATE MAP IMAGE 40 FROM SELF-ORGANIZING MAP 30  │ ～S106
    └─────────────────────────────────────────────────────┘
                         │
                         ▼
            ╭─────────────────────────╮
            │           end           │
            ╰─────────────────────────╯
```

Fig. 4

100

| MATERIAL IDENTIFICATION INFORMATION | MATERIAL SPECIFICATION |
|---|---|
| A101 | SUBSTANCE A : a1%, SUBSTANCE B : b1% · · · |
| A102 | SUBSTANCE A : a2%, SUBSTANCE B : b2% · · · |
| · · · | · · · |

102          104

Fig. 5

| MATERIAL IDENTIFICATION INFORMATION | PHYSICAL PROPERTY INFORMATION |
|---|---|
| A101 | INCOMBUSTIBILITY : a1, HEAT RESISTANCE : b1 ELASTIC MODULUS : c1, TENACITY:d1 |
| A102 | INCOMBUSTIBILITY : a2, HEAT RESISTANCE : b2 ELASTIC MODULUS : c2, TENACITY : d2 |
| ... | ... |

Fig. 6

start

LOOP PROCESS L1 FOR EACH NODE i  $\sim$ S202

LOOP PROCESS L2 FOR EACH j-th PHYSICAL PROPERTY  $\sim$ S204

DETERMINE MAGNITUDE OF j-th BASE COLOR COMPONENT OF ASSIGNED COLOR OF NODE i BASED ON VALUE THAT PHYSICAL PROPERTY VECTOR OF NODE i INDICATES FOR j-th PHYSICAL PROPERTY  $\sim$ S206

LOOP PROCESS L2  $\sim$ S208

ASSIGN COLOR SPECIFIED BY DETERMINED MAGNITUDE OF EACH BASE COLOR COMPONENT TO NODE i  $\sim$ S210

LOOP PROCESS L1  $\sim$ S212

end

Fig. 7

300

| POSITION | PHYSICAL PROPERTY VECTOR | ASSIGNED COLOR | MATERIAL IDENTIFICATION INFORMATION |
|----------|--------------------------|----------------|-------------------------------------|
| (1, 1) | (a11, b11, c11, d11) | (r11, g11, b11) | – |
| (1, 2) | (a12, b12, c12, d12) | (r12, g12, b12) | A101 |
| (1, 3) | (a13, b13, c13, d13) | (r13, g13, b13) | – |
| . . . | . . . | . . . | . . . |

302     304     306     308

Fig. 8

Fig. 9

## INTERNATIONAL SEARCH REPORT

| International application No. |
| --- |
| **PCT/JP2022/005626** |

| A. | CLASSIFICATION OF SUBJECT MATTER |
| --- | --- |

*G06F 30/12*(2020.01)i; *G06F 30/27*(2020.01)i
FI: G06F30/27; G06F30/12

According to International Patent Classification (IPC) or to both national classification and IPC

| B. | FIELDS SEARCHED |
| --- | --- |

Minimum documentation searched (classification system followed by classification symbols)

G06F30/12; G06F30/27

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus (JDreamIII); IEEE Xplore

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2006-285381 A (YOKOHAMA RUBBER CO LTD) 19 October 2006 (2006-10-19) paragraphs [0014]-[0015], [0020]-[0021], [0048], fig. 1-2 | 1-18 |
| Y | WO 2006/121057 A1 (KYOTO UNIVERSITY) 16 November 2006 (2006-11-16) paragraph [0059] | 1-18 |
| Y | JP 2008-293315 A (YOKOHAMA RUBBER CO LTD) 04 December 2008 (2008-12-04) paragraphs [0038], [0054]-[0055], fig. 7 | 2, 8, 14 |
| Y | JP 2008-9934 A (KAGAWA UNIV) 17 January 2008 (2008-01-17) paragraphs [0050], [0109] | 4-5, 10-11, 16-17 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **19 April 2022** | **26 April 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2022/005626**

| Patent document cited in search report | | | Publication date (day/month/year) | Patent family member(s) | Publication date (day/month/year) |
|---|---|---|---|---|---|
| JP | 2006-285381 | A | 19 October 2006 | (Family: none) | |
| WO | 2006/121057 | A1 | 16 November 2006 | (Family: none) | |
| JP | 2008-293315 | A | 04 December 2008 | (Family: none) | |
| JP | 2008-9934 | A | 17 January 2008 | (Family: none) | |

Form PCT/ISA/210 (patent family annex) (January 2015)

**EP 4 310 715 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016148988 A
- JP 2021044488 A